# EUROPÄISCHE PATENTSCHRIFT

(11) **EP 2 790 948 B1**
(45) Veröffentlichungstag und Bekanntmachung des Hinweises auf die Patenterteilung: **23.09.2015**
(21) Anmeldenummer: 12775498.4
(22) Anmeldetag: 19.10.2012
(51) Int. Cl.: B60K 26/02

(54) **HAPTISCHES FAHRPEDAL FÜR EIN KRAFTFAHRZEUG MIT EINEM AKTUATOR ZUGEORDNETEM RÜCKSTELLELEMENT**
HAPTIC ACCELERATION PEDAL FOR A MOTOR VEHICLE HAVING A RESETTING ELEMENT ASSOCIATED WITH AN ACTUATOR
PÉDALE D'ACCÉLÉRATEUR HAPTIQUE POUR UN VÉHICULE À MOTEUR COMPORTANT UN ÉLÉMENT DE RAPPEL AFFECTÉ À UN ACTIONNEUR

(30) Priorität: 12.12.2011 DE 102011088281
(43) Veröffentlichungstag der Anmeldung: 22.10.2014
(73) Patentinhaber: Robert Bosch GmbH, 70442 Stuttgart (DE)
(72) Erfinder: WAGNER, Alexandre, 70435 Stuttgart (DE); SIEBER, Udo, 74321 Bietigheim (DE); DEISSLER, Markus, 74172 Neckarsulm (DE)
(86) Internationale Anmeldenummer: PCT/EP2012/070716
(87) Internationale Veröffentlichungsnummer: WO 2013/087265

(56) Entgegenhaltungen:
- WO-A1-2010/130605
- DE-A1-102009 045 710
- FR-A1- 2 846 759

## Beschreibung

### Gebiet der Erfindung

Die vorliegende Erfindung betrifft ein haptisches Fahrpedal für ein Kraftfahrzeug, bei dem ein Pedalelement von einem Aktuator mit einer Kraft beaufschlagt werden kann.

### Stand der Technik

In modernen Kraftfahrzeugen wird der Fahrer durch eine Vielzahl von zur Verfügung gestellten Informationen beim Führen des Kraftfahrzeugs unterstützt. Beispielsweise kann es hilfreich sein, dem Fahrer Rückmeldungen über bestimmte Fahrzustände in Form von Signalen zu geben, um die Sicherheit beim Fahren oder den Komfort des Fahrers erhöhen zu können oder um Treibstoff einsparen zu können. Diese Rückmeldungen können auf verschiedene Weise wie zum Beispiel optisch oder akustisch bereitgestellt werden.

In modernen Fahrzeugen werden zusätzlich auch Möglichkeiten der haptischen Rückmeldung an den Fahrer über das Fahrpedal des Fahrzeugs implementiert. Das haptische Fahrpedal weist hierbei ein Pedalelement auf, welches von einer Ruhestellung aus in einer Betätigungsrichtung hin zu einer maximal betätigten Stellung bewegt werden kann, und welches durch einen Aktuator mit einer Kraft entgegen der Betätigungsrichtung beaufschlagt werden kann. Der Aktuator kann hierbei über ein durch einen Motor verlagerbares Betätigungselement mit dem Pedalelement zusammenwirken und bei Bestromen des Motors eine Gegenkraft auf das Pedalelement ausüben, die das Pedalelement beispielsweise in Vibrationen oder Pulsationen versetzt oder die ab einer bestimmten Stellung des Pedalelementes ein weiteres Niederdrücken des Pedalelementes erschweren und auf diese Weise einen variablen Druckpunkt für das haptische Fahrpedal generieren kann. Dem Fahrer können so durch dessen haptische Wahrnehmung Hinweise und Warnungen mitgeteilt oder auch Komfortfunktionen bereitgestellt werden, ohne dass dieser durch optische oder akustische Signale beispielsweise vom Beobachten des Verkehrs abgelenkt würde.

DE 25 55 429 beschreibt ein System zur Erzeugung von taktilen bzw. haptisch wahrnehmbaren Signalen in einem Fahrzeug

Die Merkmale des Oberbegriffs des Anspruchs 1 ist aus WO 2010/130605 bekannt.

### Offenbarung der Erfindung

Die vorliegende Erfindung ermöglicht in ihren Ausführungsformen eine vorteilhafte Funktion eines haptischen Fahrpedals in einem Kraftfahrzeug. Dabei kann beispielsweise ein störender Einfluss des Aktuators auf das Pedalelement des Fahrpedals insbesondere in Zeitphasen, in denen kein haptisch wahrnehmbares Signal durch das Fahrpedal erzeugt werden soll, minimiert werden. Auch eine Stromaufnahme des Aktuators und damit verbunden eine Erwärmung des Aktuators kann reduziert werden.

Bei dem hier vorgeschlagenen haptischen Fahrpedal wird der Aktuator mit einem zusätzlichen Rückstellelement versehen, welches das Betätigungselement des Aktuators mit einer Rückstellkraft entgegen der Aktuationsrichtung des Betätigungselements elastisch vorspannt.

Das Rückstellelement kann dabei derart ausgestaltet sein, dass es aufgrund seiner elastischen Vorspannung in dem Aktuator stets eine zumindest geringe Kraft derart auf das Betätigungselement des Aktuators ausübt, dass dieses in einer Richtung weg von dem Pedalelement belastet wird.

Das Rückstellelement kann beispielsweise als Feder oder Elastomer-Element ausgebildet sein. Mit anderen Worten kann das Rückstellelement ein passives Element sein, das auf das Betätigungselement eine Rückstellkraft ausüben kann aufgrund von in dem Rückstellelement gespeicherter potentieller Energie. Dem Rückstellelement braucht daher zum Erzeugen der Rückstellkraft keine Energie in Form von elektrischem Strom zugeführt zu werden.

Das Rückstellelement kann dabei in das haptische Fahrpedal, insbesondere in ein Gehäuse des Aktuators integriert sein. Ein Widerlager des Rückstellelementes kann räumlich fest fixiert sein, so dass das Rückstellelement beispielsweise unabhängig von einer aktuellen Lage des Pedalelementes des Fahrpedals immer eine Rückstellkraft auf das Betätigungselement des Aktuators ausübt.

Der Aktuator bzw. dessen Betätigungselement ist im Allgemeinen mit dem Pedalelement aus Sicherheitsgründen mechanisch nur einseitig gekoppelt. Das heißt, der Aktuator soll nur Rückstellkräfte entgegen einer vom Fahrer durch Niedertreten des Fahrpedals bewirkten Bewegungsrichtung ausüben können, aber nicht fähig sein, das Pedalelement in dessen Bewegungsrichtung, das heißt zum Beispiel weg von einer Ruhelage, ziehen zu können. Mit anderen Worten soll der Aktuator das Pedalelement lediglich in einer Aktuationsrichtung entgegen der Betätigungsrichtung mit einer Kraft beaufschlagen können. Das Rückstellelement, das das Betätigungselement des Aktuators entgegen dieser Aktuationsrichtung elastisch vorspannt, versucht somit mit seiner Rückstellkraft, das Betätigungselement immer weg von dem Pedalelement zu schieben. Auf diese Weise kann das Betätigungselement über die von dem Rückstellelement bewirkte Rückstellkraft aus einem mechanischen Kontakt mit dem Pedalelement gelöst werden und somit eine Wirkverbindung zwischen dem Betätigungselement des Aktuators und dem Pedalelement mit Hilfe des Rückstellelementes zumindest dann vermieden werden, wenn der Aktuator nicht mit Hilfe seines Motors aktiv betrieben wird, das heißt, das Betätigungselement mit Hilfe des Motors entgegen der von dem Rückstellelement bewirkten Rückstellkraft hin in die Aktuationsrichtung bewegt wird.

Für den Fall eines von einem Elektromotor angetriebenen Aktuators kann somit das aktuatoreigene Rückstellelement, zumindest solange der Elektromotor nicht bestromt wird, eine Entkopplung zwischen dem Aktuator bzw. dessen Betätigungselement und dem Pedalelement bewirken oder zumindest unterstützen. Durch eine solche Entkopplung des Aktuators von dem Pedalelement in Zeitphasen ohne Erzeugung eines haptisch wahrnehmbaren Signals kann somit eine Gängigkeit des Fahrpedals unabhängig von Einflüssen durch den Aktuator bleiben. Insbesondere können störende Trägheitseffekte, beispielsweise in Form einer Schwergängigkeit bei einer starken Beschleunigung des Pedalelementes durch den Fahrer und/oder Welligkeitseffekte, beispielsweise aufgrund von Rastmomenten des in dem Aktuator vorgesehenen Elektromotors, vermieden werden.

Insbesondere, wenn der Motor des Aktuators ein Gleichstrommotor ist und beispielsweise zur Erzeugung einer ausreichend hohen Kraft auf das Pedalelement mit einem Getriebe gekoppelt ist, das dann das Betätigungselement antreibt, kann die von dem Rückstellelement erzeugte Rückstellkraft einen positiven Einfluss auf Verschleißeffekte insbesondere in dem Getriebe bewirken. Zusammen mit dem Betätigungselement wird dann nämlich auch das daran angekoppelte Getriebe von dem Rückstellelement elastisch vorgespannt, so dass eine sogenannte Getriebelose, also beispielsweise ein Spiel zwischen Zahnrädern des Getriebes, weitgehend beseitigt werden kann. Ein solches Spiel ist fertigungsbedingt kaum zu verhindern und kann beim Betrieb des Aktuators zu Geräuschen führen. Insbesondere wenn der Motor des Aktuators seine Bewegungsrichtung ändert, beispielsweise bei einem pulsierenden oder eine Vibration erzeugenden Betrieb des haptischen Fahrpedals, können Zahnflanken von Zahnrädern innerhalb des Getriebes aneinander stoßen und ein störendes Betriebsgeräusch erzeugen. Insbesondere, da der Aktuator des Fahrpedals innerhalb eines Fahrgastinnenraums des Fahrzeugs angeordnet sein kann, sollte eine Geräuschentwicklung durch den Aktuator möglichst gering gehalten werden.

Es kann vorgesehen sein, dass das Betätigungselement eine Ruheposition aufweist, in der das Betätigungselement für keine der von dem Pedalelement möglicherweise einzunehmenden Positionen mit dem Pedalelement zusammenwirkt. Mit anderen Worten soll in diesem Fall das Betätigungselement des Aktuators in einer Position angeordnet werden können, in der es sich außerhalb des Verfahrwegs des Pedalelementes befindet und somit ein Bewegen des Pedalelementes nicht stören kann. Das Rückstellelement des Aktuators kann hierbei derart ausgebildet sein, dass ein Rückstellen des Betätigungselements bis in diese Ruheposition zumindest unterstützt wird. Hierzu kann die Ausgestaltung des Rückstellelementes beispielsweise hinsichtlich seiner räumlichen Anordnung, seiner Größe und/oder der von ihm bewirkten elastischen Rückstellkraft derart gewählt sein, dass das Betätigungselement von dem Rückstellelement bis hin zur Erreichung der Ruheposition geschoben wird.

Das Rückstellelement kann dabei eine ausreichend starke Rückstellkraft erzeugen, um das Betätigungselement bei passivem Motor bis in die Ruheposition zu verlagern. Die von dem Rückstellelement bewirkte Rückstellkraft sollte hierzu beispielsweise Trägheitsmomente und magnetische Rastmomente, wie sie von dem mit dem Betätigungselement gekoppelten Motor erzeugt werden können, sowie Reibungskräfte auf das Betätigungselement überkompensieren können. Dadurch kann das Betätigungselement des Aktuators immer dann, wenn kein haptisch wahrnehmbares Signal erzeugt werden soll und der Motor des Aktuators somit nicht aktiv betrieben wird, von dem Rückstellelement hin zu der Ruheposition bewegt werden. Mit anderen Worten kann das Rückstellelement den Aktuator in seine Ruheposition bewegen und dort halten, wenn er nicht benötigt wird.

Da dies ohne Einsatz des Motors geschehen kann, kann ein Energieverbrauch sowie eine Erwärmung des Aktuators gering gehalten werden. Lediglich bei Bedarf einer Erzeugung eines haptisch wahrnehmbaren Signals wird der Aktuator dann aktiv betrieben und in eine Position gefahren, in der er mit dem Pedalelement zusammenwirkt.

Die von dem Rückstellelement bewirkte Rückstellkraft muss jedoch nicht unbedingt ausreichen, um das Betätigungselement bei passivem Motor bis in die Ruheposition verlagern zu können. Auch eine geringere von dem Rückstellelement bewirkte Rückstellkraft kann dahingehend vorteilhaft sein, dass ein von dem Motor aktiv bewirktes Zurückfahren in die Ruheposition unterstützt wird und somit eine Stromaufnahme des Motors reduziert werden kann.

Außerdem kann eine Schnelligkeit, mit der das Betätigungselement in die Ruheposition verlagert werden kann, durch das Rückstellelement erhöht werden, so dass zum Beispiel unerwünschte Kollisionen des Pedalelements mit dem Betätigungselement des Aktuators zum Beispiel bei schnellen Pedalbetätigungen vermieden werden können.

Ein weiterer durch das Rückstellelement erreichbarer Vorteil kann sich bei der Ansteuerung des Aktuators ergeben. Um mit Hilfe des Aktuators ein haptisch wahrnehmbares Signal in dem Pedalelement erzeugen zu können, muss dessen Betätigungselement präzise und schnell verlagert werden können, um Kräfte auf das Pedalelement auszuüben. Um eine Positionierung des Betätigungselementes präzise regeln zu können, müssen hierfür von Sensoren Informationen über die aktuelle Positionierung sowie möglicherweise über eine Bewegungsrichtung des Betätigungselementes zur Verfügung gestellt werden. Das in dem Aktuator vorgesehene Rückstellelement kann dabei ein Regelungsverhalten des Aktuators stabilisieren. Unerwünschte Schwingungen können reduziert werden, da das elastische Vorspannen des Rückstellelements regelungstechnisch als dämpfendes Glied fungieren kann. Zudem kann das Vorspannen die Lose des Getriebespiels eliminieren, was den Regelkreis stets geschlossen, also frei vom Öffnen durch die Lose, hält. Das stellt insbesondere für kleine Stellbewegungen stabiles und überschwingungsfreies Regelverhalten sicher. im dynamischen Übertragungsverhalten der Regelstrecke kann wegen der Rückwirkung des Rückstellelementes ein sogenannter Integratorpol entfallen. Die Lageregelung des Aktuators kann somit insgesamt robuster werden.

Einen weiteren möglichen Vorteil stellt die Bereitstellung eines zusätzlichen Kalibrierpunktes für den Lagesensor des Aktuators das. Eine erste Kalibriermöglichkeit ergibt sich hierbei an der Parkposition, in die der Aktuator durch das Rückstellelement gebracht wird. Eine weitere Kalibriermöglichkeit ergibt sich bei aktivem Anfahren des Aktuators an das Fahrpedal in Leerlaufstellung.

Es wird angemerkt, dass mögliche Merkmale und Vorteile hierin mit Bezug auf verschiedene Ausführungsformen der Erfindung beschrieben sind. Ein Fachmann wird erkennen, dass die einzelnen Merkmale in geeigneter Weise miteinander kombiniert oder ausgetauscht werden können, um auf diese Weise zu weiteren Ausführungsformen und möglicherweise Synergieeffekten zu gelangen.

### Kurze Beschreibung der Zeichnungen

Nachfolgend werden Ausführungsformen der Erfindung mit Bezug auf die beigefügten Zeichnungen beschrieben. Weder die Beschreibung noch die Zeichnungen sollen dabei als die Erfindung einschränkend ausgelegt werden.
- Figur 1: zeigt ein Kraftfahrzeug mit einem haptischen Fahrpedal gemäß einer Ausführungsform der vorliegenden Erfindung;
- Figur 2: zeigt eine vergrößerte Ansicht eines haptischen Fahrpedals gemäß einer Ausführungsform der vorliegenden Erfindung.

Die Zeichnungen sind lediglich schematisch und nicht maßstabsgetreu.

### Ausführungsformen der Erfindung

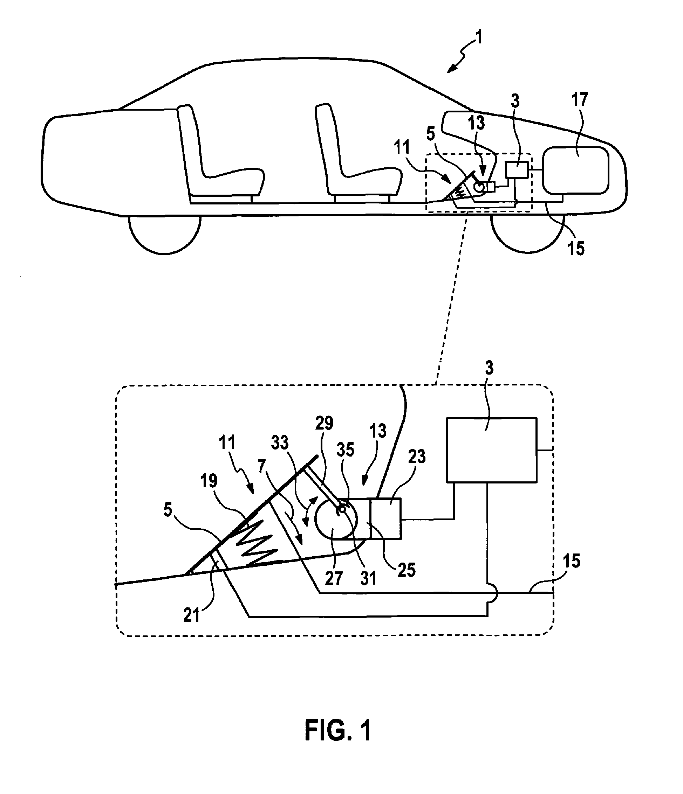

Figur 1 zeigt eine Schnittansicht eines Fahrzeugs 1 mit einem haptischen Fahrpedal 11. Durch Niederdrücken eines Pedalelements 5 in einer Betätigungsrichtung 7 kann über einen Seilzug 15 oder eine mit einem Motorsteuergerät verbundene Leitung (nicht dargestellt) ein Motor 17 zur Leistungsabgabe angesteuert werden. Eine Feder 19 spannt das Pedalelement 5 entgegen der Betätigungsrichtung 7 hin zu einer Ruhelage vor. Ein Positionssensor 21 kann die aktuelle Position bzw. Lage des Pedalelements 5 bestimmen.

Das haptische Fahrpedal 11 verfügt über einen Aktuator 13, mit Hilfe dessen das Pedalelement 5 in eine gewünschte Aktuationsrichtung entgegen der Betätigungsrichtung 7 bewegt bzw. in diese Richtung mit Kraft beaufschlagt werden kann. Der Aktuator 13 kann hierbei das Fahrpedal 11 zu Schwingungen beispielsweise in Form von Vibrationen oder Pulsationen anregen.

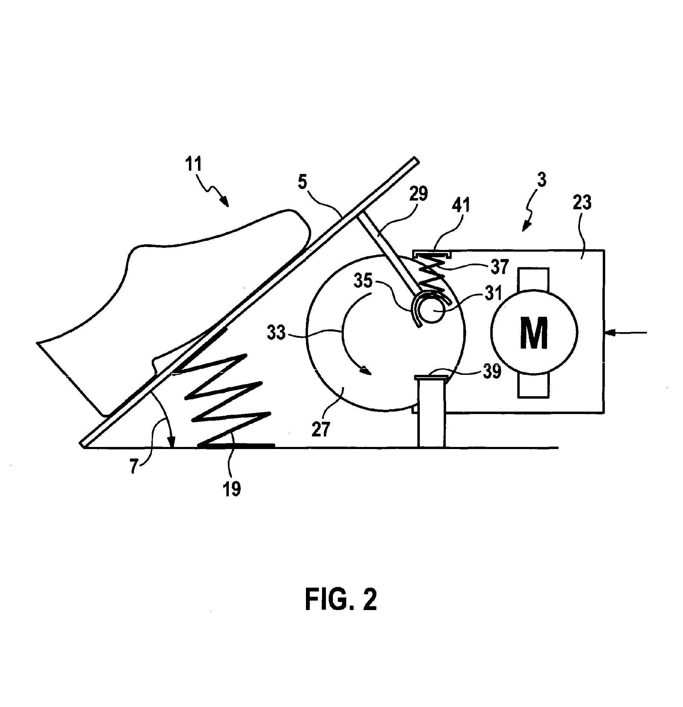

Wie in der Vergrößerung aus Figur 1 sowie in Figur 2 dargestellt, kann der Aktuator 13 in vorteilhafter Weise mit einem einfachen Gleichstrommotor 23 betrieben werden, der über ein Getriebe 25 mit einem scheibenförmigen Betätigungselement 27 gekoppelt ist. Durch Betätigen des Motors 23 kann das Betätigungselement 27, wie durch den Pfeil 33 angedeutet, in oder gegen den Uhrzeigersinn verdreht werden. An dem Betätigungselement 27 ist in einem außerzentrischen Bereich ein Nocken 31 angebracht. Dieser Nocken 31 kann mit einem an dem Pedalelement 5 vorgesehenen Stößel 29 zusammenwirken. Hierzu weist der Stößel 29 an seinem zu dem Aktuator 13 gerichteten Ende eine gabelförmige Aufnahme 35 auf, in die der Nocken 31 eingreifen kann, sobald das Betätigungselement 27 in eine entsprechende Position gedreht wurde.

Der Aktuator 13 wird von einem Steuergerät 3 gesteuert. Das Steuergerät 3 erkennt, wenn einem Fahrer über das Fahrpedal 11 ein haptisch wahrnehmbares Signal übermittelt werden soll, um ihn beispielsweise auf eine Gefahrensituation hinzuweisen, oder ihm die Möglichkeit einer kraftstoffsparenden Fahrweise anzudeuten.

Wenn ein haptisch wahrnehmbares Signal an dem Fahrpedal 11 erzeugt werden soll, bestromt das Steuergerät 3 den Motor 23 derart, dass das Betätigungselement 27, gegen den Uhrzeigersinn verdreht wird, so dass der Nocken 31 mit der Aufnahme 35 des Stößels 29 in Eingriff kommt und dann Kräfte auf das Pedaleiement 5 ausüben kann.

In dem Aktuator 3 ist, wie in Figur 2 dargestellt, zusätzlich eine Feder vorgesehen, die als Rückstellelement 37 dient. Diese Feder übt eine Kraft auf das Betätigungselement 27 entgegen der Aktuationsrichtung 33 aus und spannt dieses somit entgegen der Aktuationsrichtung 33 elastisch vor. Wenn von dem Motor 23 auf das Betätigungselement 27 keine Kraft in der Aktuationsrichtung 33 ausgeübt wird oder der Motor sogar in umgekehrter Richtung betrieben wird, um das Betätigungselement 27 entgegen der Aktuationsrichtung 33 zu bewegen, unterstützt die Feder 37 eine Bewegung des Betätigungselements 27 entgegen der Aktuationsrichtung 33.

Das Betätigungselement 27 weist hierbei eine Ruheposition auf, in der es verharren soll, solange kein haptisch wahrnehmbares Signal erzeugt werden soll. Diese Ruheposition ist so gewählt, dass der Nocken 31 des Betätigungselements 27 derart angeordnet ist, dass er keinesfalls mit der Aufnahme 35 am Ende des Stößels 29 des Pedalelements 5 in Eingriff kommt, egal, welche Stellung von dem Pedalelement 5 angenommen wird.

Bei der in Figur 2 dargestellten Ausführungsform weist der Aktuator 3 einen mechanischen Anschlag 39 im Bereich der Ruheposition auf. Die Feder des Rückstellelementes 37 ist an einem Ende in einem Widerlager 41 an einem Gehäuse des Aktuators gehalten und schiebt mit seinem anderen Ende das Betätigungselement 27 derart entgegen der Aktuationsrichtung 33, bis der Nocken 31 in Anlage mit dem Anschlag 39 kommt. Dort wird das Betätigungselement 27 aufgrund der Federkraft des Rückstellelementes 37 während eines stromlosen Zustandes des Aktuators 3 gehalten.

Das Rückstellelement 37 des Aktuators 3 kann auch an anderer Position und mit einer anderen Ausgestaltung ausgebildet sein. Beispielsweise kann eine Rückstellfeder in geeigneter Weise mit einem Getrieberad innerhalb des Aktuators 3 verbunden sein, um dieses derart vorzuspannen, dass das Betätigungselement 27 entgegen der Aktuationsrichtung 33 vorgespannt wird.

## Patentansprüche

1. Haptisches Fahrpedal (11) für ein Kraftfahrzeug (1), aufweisend:
ein Pedalelement (5), welches von einer Ruhestellung aus in einer Betätigungsrichtung (7) hin zu einer maximal betätigten Stellung bewegt werden kann, und
einen Aktuator (13), der über ein durch einen Motor (23) verlagerbares Betätigungselement (27) mit dem Pedalelement (5) zusammenwirken kann und über das Betätigungselement (27) in einer Aktuationsrichtung (33) eine Kraft entgegen der Betätigungsrichtung (7) auf das Pedalelement (5) ausüben kann,
**dadurch gekennzeichnet, dass**
der Aktuator (13) ein Rückstellelement (37) aufweist, welches das Betätigungselement (27) mit einer Rückstellkraft entgegen der Aktuationsrichtung (33) elastisch vorspannt.

2. Haptisches Fahrpedal nach Anspruch 1, wobei das Betätigungselement (27) eine Ruheposition aufweist, in der das Betätigungselement (27) für keine von möglichen Positionen des Pedalelements (5) mit dem Pedalelement (5) zusammenwirkt.

3. Haptisches Fahrpedal nach Anspruch 2, wobei das Rückstellelement (37) ein Rückstellen des Betätigungselements (27) bis in die Ruheposition unterstützt.

4. Haptisches Fahrpedal nach Anspruch 2 oder 3, wobei das Rückstellelement (37) eine ausreichend starke Rückstellkraft erzeugt, um das Betätigungselement (27) bei passivem Motor (23) bis in die Ruheposition zu verlagern.

5. Haptisches Fahrpedal nach einem der Ansprüche 1 bis 4, wobei das Rückstellelement (37) als Feder ausgebildet ist.

6. Haptisches Fahrpedal nach einem der Ansprüche 1 bis 5, wobei ein Widerlager (41) des Rückstellelementes (37) räumlich fest fixiert ist.

7. Haptisches Fahrpedal nach einem der Ansprüche 1 bis 6, wobei der Motor (23) des Aktuators (13) mit einem Getriebe (25) gekoppelt ist.

8. Haptisches Fahrpedal nach einem der Ansprüche 1 bis 7, wobei der Motor (23) des Aktuators (13) ein Gleichstrommotor ist.

## Claims

1. Haptic accelerator pedal (11) for a motor vehicle (1), having:
a pedal element (5) which can be moved from a position of rest in an activation direction (7) to a position of maximum activation, and
an actuator (13) which can interact with the pedal element (5) via an activation element (27) which can be moved by a motor (23) and can apply a force, via the activation element (27) in an actuation direction (33), to the pedal element (5) counter to the activation direction (7),
**characterized in that**
the actuator (13) has a resetting element (37) which elastically prestresses the activation element (27) with a resetting force counter to the actuation direction (33).

2. Haptic accelerator pedal according to Claim 1, wherein the activation element (27) has a position of rest in which the activation element (27) interacts with the pedal element (5) for none of the possible positions of the pedal element (5).

3. Haptic accelerator pedal according to Claim 2, wherein the resetting element (37) assists resetting of the activation element (27) as far as the position of rest.

4. Haptic accelerator pedal according to Claim 2 or 3, wherein the resetting element (37) generates a sufficiently strong resetting force to move the activation element (27) as far as the position of rest when the motor (23) is passive.

5. Haptic accelerator pedal according to one of Claims 1 to 4, wherein the resetting element (37) is embodied as a spring.

6. Haptic accelerator pedal according to one of Claims 1 to 5, wherein a counterbearing (41) of the resetting element (37) is secured in a spatially fixed fashion.

7. Haptic accelerator pedal according to one of Claims 1 to 6, wherein the motor (23) of the actuator (13) is coupled to a gearbox (25).

8. Haptic accelerator pedal according to one of Claims 1 to 7, wherein the motor (23) of the actuator (13) is a DC motor.

## Revendications

1. Pédale d'accélérateur haptique (11) pour un véhicule automobile (1), présentant :
un élément de pédale (5), lequel peut être déplacé d'une position de repos dans une direction d'actionnement (7) jusqu'à une position actionnée au maximum, et
un actionneur (13) qui peut coopérer par le biais d'un élément d'actionnement (27) déplaçable par un moteur (23) avec l'élément de pédale (5) et qui peut exercer sur l'élément de pédale (5) par le biais de l'élément d'actionnement (27) dans une direction d'actionnement (33) une force à l'encontre de la direction d'actionnement (7),
**caractérisée en ce que**
l'actionneur (13) présente un élément de rappel (37) qui précontraint élastiquement l'élément d'actionnement (27) avec une force de rappel à l'encontre de la direction d'actionnement (33).

2. Pédale d'accélérateur haptique selon la revendication 1, dans laquelle l'élément d'actionnement (27) présente une position de repos dans laquelle l'élément d'actionnement (27) ne coopère avec l'élément de pédale (5) pour aucune des positions possibles de l'élément de pédale (5) .

3. Pédale d'accélérateur haptique selon la revendication 2, dans laquelle l'élément de rappel (37) supporte un rappel de l'élément d'actionnement (27) jusque dans la position de repos.

4. Pédale d'accélérateur haptique selon la revendication 2 ou 3, dans laquelle l'élément de rappel (37) exerce une force de rappel suffisamment forte pour déplacer l'élément d'actionnement (27) jusque dans la position de repos lorsque le moteur (23) est passif.

5. Pédale d'accélérateur haptique selon l'une quelconque des revendications 1 à 4, dans laquelle l'élément de rappel (37) est réalisé sous la forme d'un ressort.

6. Pédale d'accélérateur haptique selon l'une quelconque des revendications 1 à 5, dans laquelle une butée (41) de l'élément de rappel (37) est fixée spatialement.

7. Pédale d'accélérateur haptique selon l'une quelconque des revendications 1 à 6, dans laquelle le moteur (23) de l'actionneur (13) est accouplé à une transmission (25).

8. Pédale d'accélérateur haptique selon l'une quelconque des revendications 1 à 7, dans laquelle le moteur (23) de l'actionneur (13) est un moteur à courant continu.
